Europäisches Patentamt

European Patent Office

Office européen des brevets

(19)

(11) Numéro de publication : **0 018 925**
**B1**

(12) FASCICULE DE BREVET EUROPÉEN

(45) Date de publication du fascicule du brevet :
01.06.83

(51) Int. Cl.³ : **C 03 B 33/02**

(21) Numéro de dépôt : 80400620.3

(22) Date de dépôt : 07.05.80

(54) Rompeuse pour la découpe de travers dans des plateaux en verre.

(30) Priorité : 07.05.79 DE 2918331

(43) Date de publication de la demande :
12.11.80 **Bulletin 80/23**

(45) Mention de la délivrance du brevet :
01.06.83 **Bulletin 83/22**

(84) Etats contractants désignés :
**BE CH FR GB IT LI**

(56) Documents cités :
**DE B 1 226 754**
**FR A 1 426 937**
**FR A 1 465 518**
**FR A 2 023 302**
**US A 3 372 847**

(73) Titulaire : **SAINT-GOBAIN VITRAGE**
**Les Miroirs 18, avenue d'Alsace**
**F-92400 Courbevoie (FR)**

(72) Inventeur : **Johannes, Paul**
**Grüner Weg 54**
**Datteln (DE)**

(74) Mandataire : **Eudes, Marcel et al**
**Saint-Gobain Recherche 39 Quai Lucien Lefranc**
**F-93304 Aubervilliers Cedex (FR)**

Rompeuse pour la découpe de travers dans des plateaux en verre

L'invention a pour objet un dispositif pour le rompage automatique d'un plateau en verre pendant son transport, le long de lignes de découpe disposées transversalement sur ce plateau, dispositif comprenant un rouleau rompeur placé entre deux convoyeurs horizontaux, l'un d'amenée, l'autre d'évacuation, rouleau dont la génératrice supérieure se trouve à un niveau supérieur à celui des convoyeurs.

Dans les dispositifs connus de ce type (US-A-3 372 847), le rouleau rompeur est disposé sur toute la largeur de la feuille, parallèlement au plan de transport. Ce rouleau exerce un moment de flexion sur la feuille de verre ce qui, à l'instant où la ligne de découpe franchit le rouleau, provoque la rupture le long de cette ligne.

Des rompeuses de ce type sont largement utilisées lorsque les plateaux de verre doivent être découpés en bandes ou en feuilles relativement larges. Toutefois, s'il faut y découper des feuilles plus petites, de dimensions différentes, en optimisant la découpe, et si, par conséquent, diverses lignes de découpe longent à faible distance une partie d'une ligne de découpe transversale allant d'un bord à l'autre, il n'est plus possible d'utiliser les dispositifs en question. Lorsque l'on cherche à le faire dans ce but particulier, on ne peut éviter que la rupture, au lieu de se limiter aux lignes de découpe traversières, se propage d'une façon imprévisible dans les lignes qui les longent parallèlement.

C'est pourquoi, en pratique, on ne découpe pas les grands plateaux de verre tracés en vue d'une découpe optimale sur des lignes automatiques mais à poste fixe sur des tables de rompage où ils sont placés à la main dans l'exacte position voulue. L'opération s'effectue alors en soulevant une barre de rompage insérée dans la table sous le plateau de verre. En raison de son mode opératoire discontinu et parce qu'elle exige que le plateau puis les feuilles de verre découpées soient déplacées manuellement, cette méthode réclame beaucoup de main-d'œuvre.

L'invention a pour objet de créer un dispositif de découpe automatique de grands plateaux qui se prête en particulier, sans inconvénients, au rompage selon des lignes traversières longées parallèlement à faible distance par d'autres lignes de découpe.

Le dispositif selon l'invention possède un rouleau rompeur incliné de sorte que la génératrice supérieure de sa surface se trouve sensiblement au niveau du convoyeur d'amenée en son extrémité la plus basse et, à l'extrémité opposée, la plus haute, de ce rouleau rompeur, un rouleau rompeur secondaire, en prise sur un seul bord du plateau de verre, et placé assez haut pour que sa génératrice supérieure se trouve elle-même au-dessus de celle du rouleau rompeur incliné.

Une telle combinaison de deux rouleaux rompeurs, à savoir un rouleau rompeur traversant incliné et un rouleau secondaire disposé encore au-dessus conduit à une meilleure maîtrise du processus de rompage que les dispositifs connus. Le rouleau rompeur traversant incliné exerce tout d'abord sur le plateau de verre un moment de flexion qui cependant ne suffit pas à provoquer la rupture sur la ligne de découpe. C'est seulement le rouleau secondaire attaquant un seul bord du grand plateau qui augmente suffisamment l'effort sur ce bord pour amorcer, à son emplacement, une rupture qui se propage alors grâce à l'action du rouleau incliné.

Le moment de flexion décroissant qui résulte de l'inclinaison du rouleau rompeur traversant vers le bord opposé du plateau de verre suffit pour achever la rupture le long de la ligne traversière sans que cette rupture se propage en dehors de cette ligne vers l'une de celles qui la longent à faible distance. L'axe du rouleau rompeur secondaire peut être placé dans le plan vertical déterminé par l'axe du rouleau incliné ; toutefois, selon une caractéristique avantageuse de l'invention, il se trouve de préférence un peu en arrière, par rapport à la direction d'avance des convoyeurs, l'espacement horizontal des génératrices porteuses de l'un et l'autre rouleau pouvant aller jusqu'à quelque 300 mm.

L'inclinaison réglable du rouleau rompeur et la surélévation du rouleau secondaire placé sur le bord dépendent dans une certaine mesure de l'épaisseur des plateaux de verre à découper. Il est apparu que, pour des épaisseurs de verre courantes, il convient de donner au rouleau incliné une pente telle que l'extrémité la plus élevée de sa génératrice supérieure se trouve entre 2 à 15 mm au-dessus du transporteur d'amenée. Le rouleau rompeur secondaire, lui, se trouve avantageusement à une hauteur telle que sa génératrice supérieure est placée 4 à 20 mm au-dessus du niveau du convoyeur.

Dans une mise en œuvre avantageuse de l'invention, on dispose en aval du rouleau rompeur un galet presseur agissant sur la face supérieure du plateau afin d'augmenter le moment de flexion exercé sur le verre. L'emploi d'un tel rouleau peut être utile en particulier pour les épaisseurs de verre les plus importantes, par exemple supérieures à 6 mm, voire pour des épaisseurs inférieures, dans la mesure où il faut découper des bandes de verre relativement étroites.

D'autres caractéristiques avantageuses de l'invention ressortent des revendications et de la description d'un exemple avantageux qui est donné ci-dessous en référence aux dessins.

Ces figures montrent :
— la figure 1, un grand plateau porteur de lignes de découpe,
— la figure 2, une vue latérale de la rompeuse de l'invention,
— la figure 3, une vue en plan du dispositif représenté figure 2,
— la figure 4, une coupe en élévation selon la ligne IV-IV de la figure 3.

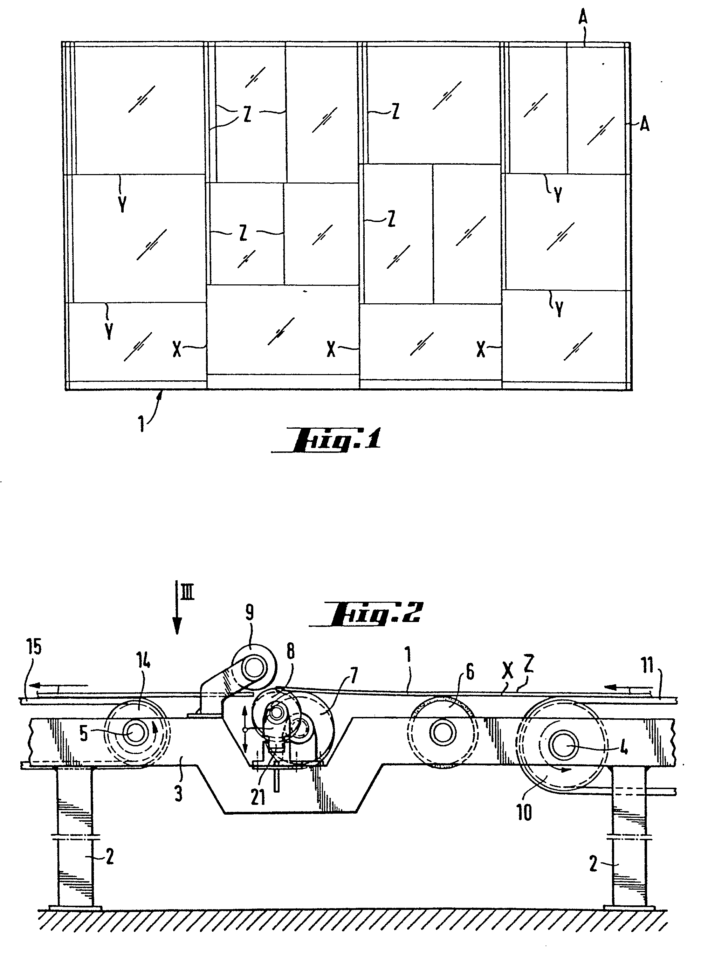

La figure 1 représente un plateau en verre 1 porteur de lignes de découpe X, Y, Z, selon lesquelles il sera découpé en feuilles plus petites. De façon habituelle, de tels plateaux 1 sont livrés par l'atelier de fabrication sous des dimensions de l'ordre de 6 m de long sur 3 m de large. En principe, pour en effectuer la découpe, on les divise tout d'abord en larges bandes dénommées travers, selon les lignes de découpe X qui s'étendent sur toute la largeur. Ces travers sont ensuite subdivisés le long des lignes de découpe Y et Z.

Le programme de découpe a pour objet d'optimiser la découpe de chaque plateau en feuilles de dimensions différentes c'est-à-dire de conduire à des pertes de verre aussi faibles que possible. Dans ce but, le processus de mesure se déroule à partir de lignes de découpe A qui courent parallèlement aux bords du plateau, de bout en bout, à faible distance de ces bords et qui permettent d'éliminer les irrégularités et les défauts présents sur ces derniers. Ensuite, la feuille la plus large de chaque travers définit la largeur de celui-ci, donc la position d'une ligne X ; comme les autres feuilles du travers sont plus étroites, on prévoit, à intervalles plus ou moins importants à partir de la ligne X, d'autres lignes de découpe désignées ici lignes Z, dont chacune se termine sur une ligne Y.

Le plateau 1 est amené sur la rompeuse de façon que les lignes de découpe X se présentent sur le dispositif parallèlement au rouleau principal, leur extrémité exempte de lignes Z à son voisinage passant sur le rouleau rompeur secondaire qui attaque un seul bord.

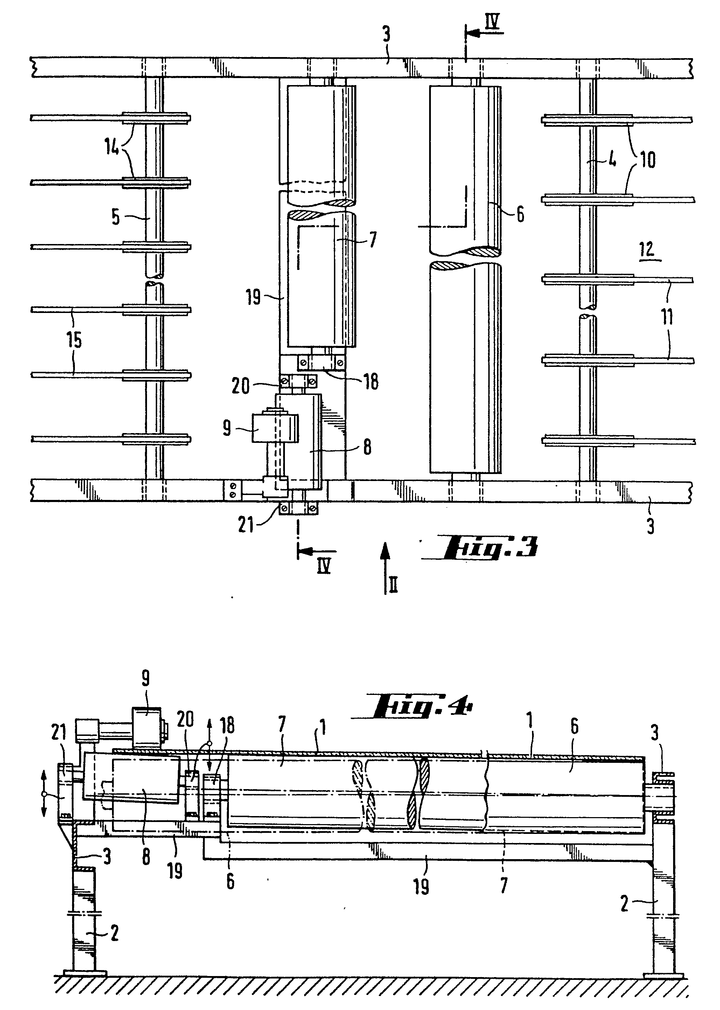

Les figures 2 à 4 montrent la construction du nouveau dispositif. Il comprend des poteaux 2 porteurs d'un bâti 3 sur lequel sont disposés les paliers des arbres 4 et 5, d'un rouleau de transport 6, des rouleaux rompeurs 7 et 8, et d'un galet presseur 9. L'arbre 4 porte des réas 10 sur lesquelles passent des courroies trapézoïdales 11 qui constituent un convoyeur horizontal 12 d'amenée du plateau de verre 1. L'arbre 5 porte des réas 14 sur lesquelles passent des courroies 15 formant le convoyeur d'évacuation des travers rompus ; ce dernier est muni d'un dispositif d'entraînement indépendant de celui du convoyeur d'alimentation. Le rouleau transporteur 6 ainsi que le rouleau rompeur incliné 7, le rouleau rompeur secondaire 8 et le galet presseur 9 sont placés entre les deux convoyeurs. La génératrice supérieure du rouleau transporteur 6 se trouve à hauteur de la face porteuse des courroies transporteuses 11. Ce rouleau, comme le rouleau rompeur 7, est entraîné en synchronisme avec les courroies 11, de sorte que leurs vitesses périphériques se correspondent. Le rouleau transporteur 6 fournit un support stable au plateau de verre 1 en avant du rouleau rompeur 7.

Le rouleau rompeur 7 est disposé dans une position inclinée, de sorte qu'après réglage, sa génératrice supérieure, du côté le plus haut, c'est-à-dire du côté où se trouve placé le rouleau rompeur secondaire 8, se trouve à quelque 5 mm au-dessus du plan de transport des courroies 11 et du rouleau 6. A son extrémité opposée, plus basse, le niveau de la génératrice supérieure correspond à celui du rouleau 6. Le palier 18 qui porte l'extrémité surélevée du rouleau incliné 7 est placé sur une traverse 19 du bâti qui porte également les deux paliers 20 et 21 du rouleau secondaire 8. Les paliers 20 et 21 sont réglables en hauteur ce qi.i permet non seulement de modifier la hauteur du rouleau 8, mais aussi l'incliner comme le montre la figure 4 ; une telle inclinaison peut être avantageuse parce qu'elle permet d'exercer sur la feuille un effort localisé destiné à amorcer la rupture. La hauteur du rouleau rompeur 8 est réglée de façon que sa génératrice supérieure se trouve environ 10 mm au-dessus du rouleau transporteur 6, présentant ainsi une différence de hauteur de l'ordre de 5 mm avec le point le plus élevé du rouleau rompeur 7. La disposition des rouleaux 6, 7 et 8 se voit clairement sur la figure 4.

Le galet presseur 9 placé en aval du rouleau 8 pour agir sur la face supérieure du plateau de verre peut être mis en service le cas échéant, quand, par exemple, pour du verre relativement épais, le propre poids de la partie du plateau 1 en porte-à-faux sur le rouleau rompeur 7 ne suffit pas pour provoquer la rupture. Comme le rouleau de transport 6, le rouleau rompeur 7 est revêtu d'un manteau de matériau élastique qui fournit un certain amortissement.

Les courroies de transport 15 du convoyeur d'évacuation peuvent se trouver au même niveau que les courroies de transport 9 du convoyeur d'alimentation ou à un niveau inférieur. Une fois la rupture effectuée, elles sont entraînées à une vitesse supérieure à celle du convoyeur d'alimentation et du rouleau rompeur 7, de façon à créer un certain espacement entre les travers rompus.

## Revendications

1. Dispositif pour le rompage d'un plateau en verre, pendant son transport, le long de lignes de découpe (X) disposées transversalement sur le plateau, dispositif comprenant un rouleau rompeur (7) placé entre deux convoyeurs horizontaux l'un d'amenée (12), l'autre d'évacuation, et dont la génératrice supérieure se trouve à un niveau supérieur à celui des convoyeurs, caractérisé en ce que ce rouleau (7) est incliné de sorte que la génératrice supérieure de sa surface se trouve sensiblement au niveau du convoyeur d'amenée en son extrémité la plus basse et qu'à son extrémité opposée, la plus haute, se trouve un rouleau rompeur secondaire (8), en prise sur un seul bord du plateau de verre (1) et placé assez haut pour que sa génératrice supérieure se trouve elle-même au-dessus de celle du rouleau rompeur incliné.

2. Dispositif selon la revendication 1, caractérisé en ce que le rouleau rompeur secondaire (8) se trouve en aval du rouleau incliné (7), à une distance pouvant aller jusqu'à quelque 300 mm.

3. Dispositif selon une des revendications 1 ou 2, caractérisé en ce que l'extrémité la plus élevée de la génératrice supérieure du rouleau rompeur incliné (7) se trouve entre 2 à 15 mm au-dessus du convoyeur d'amenée.

4. Dispositif selon une des revendications 1 à 3, caractérisé en ce que la génératrice supérieure du rouleau rompeur secondaire (8) est placée 4 à 20 mm au-dessus du niveau dudit convoyeur.

5. Dispositif selon une des revendications 1 à 4, caractérisé par un galet presseur (9) agissant sur la face supérieure du plateau en aval du rouleau rompeur secondaire (8).

6. Dispositif selon l'une des revendications 1 à 5, caractérisé en ce que l'inclinaison du rouleau rompeur principal (7) est réglable.

7. Dispositif selon l'une des revendications 1 à 6, caractérisé en ce que la hauteur du rouleau secondaire (8) est réglable.

8. Dispositif selon l'une des revendications 1 à 7, caractérisé en ce que le rouleau secondaire (8) est incliné par rapport au plan de transport des convoyeurs.

9. Dispositif selon l'une des revendications 1 à 8, caractérisé en ce qu'un rouleau transporteur (6) est placé sur toute la largeur, entre le convoyeur d'amenée proprement dit (12) et le rouleau rompeur principal (7).

10. Dispositif selon l'une des revendications 1 à 9, caractérisé en ce que le rouleau transporteur (6) et le rouleau rompeur incliné (7) sont revêtus d'un manteau élastique.

11. Dispositif selon l'une des revendications 1 à 10, caractérisé en ce que les courroies (11) du transporteur d'amenée, le rouleau transporteur (6) et le rouleau rompeur incliné (7) sont mûs en synchronisme.

### Claims

1. Device for breaking a plate of glass during transport thereof, along lines of cut (X) positioned transversely on the plate, the device comprising a breaking roller (7) placed between two horizontal conveyors, one for feeding (12) and the other for removal, and of which the upper generatrix is at a level higher than the conveyors, characterised in that this roller (7) is inclined so that the upper generatrix of its surface is substantially at the level of the feeding conveyor at its lower end and that at its other, higher, end there is provided a secondary breaking roller (8) engaging a single edge part of the glass plate (1) and placed at such a height that its upper generatrix is itself above that of the inclined breaking roller.

2. Device according to claim 1, characterised in that the secondary breaking roller (8) is positioned downstream of the inclined roller (7) at a distance which may reach some 300 mm.

3. Device according to one of claims 1 and 2, characterised in that the higher end of the upper generatrix of the inclined breaking roller (7) is from 2 to 15 mm above the feeding conveyor.

4. Device according to one of claims 1 to 3, characterised in that the upper generatrix of the secondary breaking roller (8) is placed 4 to 20 mm above the level of said conveyor.

5. Device according to one of claims 1 to 4, characterised by a press wheel (9) acting on the upper surface of the plate downstream of the secondary breaking roller (8).

6. Device according to one of claims 1 to 5, characterised in that the inclination of the principal breaking roller (7) is adjustable.

7. Device according to one of claims 1 to 6, characterised in that the height of the secondary roller (8) is adjustable.

8. Device according to one of claims 1 to 7, characterised in that the secondary roller (8) is inclined relative to the plane of transport of the conveyors.

9. Device according to one of claims 1 to 8, characterised in that a transport roller (6) is placed over the whole with, between the feeding conveyor itself (12) and the principal breaking roller (7).

10. Device according to one of claims 1 to 9, characterised in that the transport roller (6) and the inclined breaking roller (7) are covered with an elastic covering.

11. Device according to one of claims 1 to 10, characterised in that the belts (11) of the feeding coknve conveyor, the transport roller (6) and the inclined breaking roller (7) are driven synchronously.

### Ansprüche

1. Vorrichtung zum Brechen einer Glastafel während ihres Transportes längs quer auf der Tafel vorgesehener Schneidlinien (X), mit einer Brechwalze (7), die zwischen zwei horizontalen Förderern angeordnet ist, von denen der eine ein Zuförderer (12), der andere ein Abförderer ist, und deren obere Erzeugende sich auf einer über der Höhe der Förderer liegenden Höhe befindet, dadurch gekennzeichnet, daß die Brechwalze (7) derart geneigt ist, daß die obere Erzeugende ihrer Oberfläche sich an ihrem niedrigsten Ende im wesentlichen auf der Höhe des Zuförderers befindet und daß sich an ihrem entgegengesetzten, höchsten Ende eine zweite, nur im Eingriff mit einem Rand der Glastafel (1) stehende Brechwalze (8) befindet, die so hoch angeordnet ist, daß ihre obere Erzeugende sich selbst über derjenigen der geneigten Brechwalze befindet.

2. Vorrichtung nach Anspruch 1, dadurch gekennzeichnet, daß die zweite Brechwalze (8) sich vor der geneigten Walze (7) in einem Abstand bis zu 300 mm befindet.

3. Vorrichtung nach einem der Ansprüche 1 oder 2, dadurch gekennzeichnet, daß sich das höchste Ende der oberen Erzeugenden der geneigten Brechwalze (7) zwischen 2 bis 15 mm über dem Zuförderer befindet.

4. Vorrichtung nach einem der Ansprüche 1 bis 3, dadurch gekennzeichnet, daß die obere Erzeugende der zweiten Brechwalze (8) 4 bis 20 mm über dem Niveau dieses Zuförderers angeordnet ist.

5. Vorrichtung nach einem der Ansprüche 1 bis 4, gekennzeichnet durch eine Druckrolle (9), die auf die obere Fläche der Tafel vor der zweiten Brechwalze (8) wirkt.

6. Vorrichtung nach einem der Ansprüche 1 bis 5, dadurch gekennzeichnet, daß die Neigung der Hauptbrechwalze (7) einstellbar ist.

7. Vorrichtung nach einem der Ansprüche 1 bis 6, dadurch gekennzeichnet, daß die Höhe der zweiten Walze (8) einstellbar ist.

8. Vorrichtung nach einem der Ansprüche 1 bis 7, dadurch gekennzeichnet, daß die zweite Walze (8) bezüglich der Transportebene der Förderer geneigt ist.

9. Vorrichtung nach einem der Ansprüche 1 bis 8, dadurch gekennzeichnet, daß zwischen dem Zuförderer (12) und der Hauptbrechwalze (7) über die gesamte Breite eine Transportwalze (6) angeordnet ist.

10. Vorrichtung nach einem der Ansprüche 1 bis 9, dadurch gekennzeichnet, daß die Transportwalze (6) und die geneigte Brechwalze (7) mit einem elastischen Mantel überzogen sind.

11. Vorrichtung nach einem der Ansprüche 1 bis 10, dadurch gekennzeichnet, daß die Riemen (11) des Zuförderers, die Transportwalze (6) und die geneigte Brechwalze (7) synchron gestellt sind.

0 018 925

**Fig. 1**

**Fig. 2**

1

**0 018 925**

*Fig:3*

*Fig:4*

2